# FASCICULE DE BREVET EUROPEEN

(11) **EP 1 627 853 B1**
(45) Date de publication et mention de la délivrance du brevet: **02.09.2009**
(21) Numéro de dépôt: 05291108.8
(22) Date de dépôt: 23.05.2005
(51) Int. Cl.: C01G 49/00

(54) **Matériau à porosité hierarchisée comprenant du silicium**
Material mit hierarchisierter Porosität enthaltend Silizium
Material with hirarchized porosity, comprising silicium

(30) Priorité: 24.06.2004 FR 0406940
(43) Date de publication de la demande: 22.02.2006
(73) Titulaire: Institut Français du Pétrole, 92852 Rueil Malmaison Cedex (FR)
(72) Inventeur: Chaumonnot, Alexandra, 69008 Lyon (FR); Coupe, Aurélie, 77186 Noisel (FR); Sanchez, Clément, 91190 Gif-Sur-Yvette (FR); Euzen, Patrick, 75015 Paris (FR); Boissière, Cédric, 75013 Paris (FR); Grosso, David, 92500 Rueil Malmaison (FR)

(56) Documents cités:
- WO-A-99/37705
- FR-A- 2 800 300
- US-A1- 2004 192 947
- US-B1- 6 387 453
- GALO J. DE A.A. SOLER-ILLIA; CLEMENT SANCHEZ, BENEDICTE LEBEAU, JOEL PATARIN: "cHEMICAL STRATEGIES TO DESIGN TEXTURED MATERIALS: FROM MICROPOROUS AND MESOPOROUS OXIDES TO NANONETWORKS AND HIERARCHICAL STRUCTURES" CHEM.REV., vol. 102, 25 octobre 2002 (2002-10-25), pages 4093-4138, XP002308089
- C.J. BRINKER, Y.LU, A. SELLINGER, H. FAN: "EVAPORATION INDUCED SELF-ASSEMBLY NANOSTRUCTURES MADE EASY" ADVANCED MATERIALS, vol. 11, no. 7, 1999, pages 579-585, XP002308090 WEINHEIM
- ARNE KARLSSON, MICHAEL STÖCKER, RALF SCHMIDT: "Composites of micro- and mesoporous materials: simultaneous synthesis of MFI/MCM-41 like phases by a mixed template approach" MICROPOROUS AND MICROPOROUS MATERIALS, vol. 27, 1999, pages 181-192, XP002308091

## Description

La présente invention se rapporte au domaine des matériaux comprenant du silicium, notamment des matériaux métallosilicates et plus précisément des matériaux aluminosilicates, présentant une porosité hiérarchisée dans le domaine de la microporosité et de la mésoporosité. Elle concerne également la préparation de ces matériaux qui sont obtenus par l'emploi de la technique de synthèse dite "aérosol".

### Etat de la technique antérieure

Les nouvelles stratégies de synthèse permettant d'obtenir des matériaux à porosité bien définie dans une très large gamme, allant des matériaux microporeux aux matériaux macroporeux en passant par des matériaux à porosité hiérarchisée, c'est-à-dire ayant des pores de plusieurs tailles, connaissent un très large développement au sein de la communauté scientifique depuis le milieu des années 90 (G. J. de A. A. Soler-Illia, C. Sanchez, B. Lebeau, J. Patarin, Chem. Rev., 2002, 102, 4093). On obtient des matériaux dont la taille des pores est contrôlée. En particulier, le développement de méthodes de synthèse dites de "chimie douce" a conduit à l'élaboration de matériaux mésostructurés à basse température par la coexistence en solution aqueuse ou dans des solvants polaires de précurseurs inorganiques avec des agents structurants, généralement des tensioactifs moléculaires ou supramoléculaires, ioniques ou neutres. Le contrôle des interactions électrostatiques ou par liaisons hydrogènes entre les précurseurs inorganiques et l'agent structurant conjointement lié à des réactions d'hydrolyse / condensation du précurseur inorganique conduit à un assemblage coopératif des phases organique et inorganique générant des agrégats micellaires de tensioactifs de taille uniforme et contrôlée au sein d'une matrice inorganique. Ce phénomène d'auto-assemblage coopératif régi, entre autres, par la concentration en agent structurant peut être induit par évaporation progressive d'une solution de réactifs dont la concentration en agent structurant est inférieure à la concentration micellaire critique, ce qui conduit soit à la formation de films mésostructurés dans le cas d'un dépôt sur substrat (technique "dip-coating"), soit à la formation d'une poudre mésostructurée après atomisation de la solution (technique aérosol). A titre d'exemple, le brevet US 6.387.453 divulgue la formation de films hybrides organiques - inorganiques mésostructurés par la technique de "dip-coating", ces mêmes auteurs ayant par ailleurs utilisé la technique aérosol pour élaborer des matériaux purement siliciques mésostructurés (C. J. Brinker, Y. Lu, A. Sellinger, H. Fan, Adv. Mater., 1999, 11, 7). La libération de la porosité est ensuite obtenue par élimination du tensioactif, celle-ci étant réalisée classiquement par des procédés d'extraction chimique ou par traitement thermique.

En fonction de la nature des précurseurs inorganiques et de l'agent structurant employé ainsi que des conditions opératoires imposées, plusieurs familles de matériaux mésostructurés ont été développées. Pour exemple, la famille M41 S initialement développée par Mobil (J. S. Beck, J. C. Vartuli, W. J. Roth, M. E. Leonowicz, C. T. Kresge, K. D. Schmitt, C. T.-W. Chu, D. H. Olson, E. W. Sheppard, S. B. McCullen, J. B. Higgins, J. L. Schlenker, J. Am. Chem. Soc., 1992, 114, 27, 10834), constituée de matériaux mésoporeux obtenus via l'emploi de surfactants ioniques comme des sels d'ammonium quaternaire, possédant une structure généralement hexagonale, cubique ou lamellaire, des pores de taille uniforme comprise dans une gamme de 1,5 à 10 nm et des parois amorphes d'épaisseur de l'ordre de 1 à 2 nm a largement été étudiée. Par la suite, afin d'accroître les propriétés de stabilité hydrothermale tout en développant des propriétés d'acido-basicité relatives à ces matériaux, l'incorporation de l'élément aluminium dans la charpente silicique amorphe par synthèse directe ou par des procédés de post-synthèse a été particulièrement regardée, les matériaux aluminosilicates obtenus possédant un rapport molaire Si/Al compris dans une gamme de 1 à 1000 (S. Kawi, S. C. Shen, Stud. Surf. Sci. Catal., 2000,129, 227 ; S. Kawi, S. C. Shen, Stud. Surf. Sci. Catal., 2000,129, 219 ; R. Mokaya, W. Jones, Chem. Commun., 1997, 2185). Les propriétés de stabilité hydrothermale et les propriétés d'acido-basicité ainsi développées par ces aluminosilicates n'ont cependant pas permis leur utilisation à un stade industriel dans des procédés de raffinage ou de pétrochimie, ce qui a progressivement conduit à l'utilisation de nouveaux agents structurants comme des macromolécules amphiphiles de type copolymères à bloc, ces dernières conduisant à des matériaux mésostructurés possédant une structure généralement hexagonale, cubique ou lamellaire, des pores de taille uniforme comprise dans une gamme de 4 à 50 nm et des parois amorphes d'épaisseur comprise dans une gamme de 3 à 7 nm. En fonction de la structure et du degré d'organisation souhaité pour le matériau mésostructuré final, les méthodes de synthèse employées peuvent avoir lieu en milieu acide (pH ≈ 1) (WO 99/37705) ou en milieu neutre (WO 96/39357), la nature de l'agent structurant utilisé jouant également un rôle prépondérant. Les matériaux aluminosilicates mésostructurés ainsi obtenus présentent des propriétés de stabilité hydrothermale accrues par rapport à leur homologues synthétisés au moyen d'autres agents structurants, leurs propriétés d'acido-basicité demeurant à peu près similaires (1 < Si/Al < 1000). (D. Zaho, J. Feng, Q. Huo, N. Melosh, G. H. Fredrickson, B. F. Chmelke, G. D. Stucky, Science, 1998, 279, 548 ; Y. -H. Yue, A. Gédéon, J. -L. Bonardet, J. B. d'Espinose, N. Melosh, J. Fraissard, Stud. Surf. Sci. Catal., 2000,129, 209).

Malgré les nombreux travaux explicités ci-dessus visant à améliorer les propriétés de stabilité hydrothermale et d'acido-basicité des matériaux aluminosilicates mésostructurés, ceux-ci n'ont pas encore connu de développement au niveau industriel, la raison principale étant que leur comportement catalytique lié à leur acidité est plus proche d'un aluminosilicate amorphe que d'un aluminosilicate cristallisé zéolithique. Beaucoup de travaux ont donc été entrepris dans le but d'élaborer des matériaux aluminosilicates possédant à la fois les avantages d'une structure mésoporeuse organisée et ceux d'un réseau microcristallin. Plusieurs techniques de synthèse permettant l'élaboration de matériaux mixtes ou composites mésostructurés/zéolithes ont ainsi été répertoriées dans la littérature ouverte. Une première technique de synthèse consiste à synthétiser en première étape un matériau aluminosilicate mésostructuré selon les méthodes classiques explicitées ci-dessus puis, en deuxième étape, à imprégner ce matériau avec un agent structurant habituellement utilisé dans la synthèse de matériaux zéolithiques. Un traitement hydrothermal adapté conduit à une zéolithisation des parois (ou murs) amorphes de l'aluminosilicate mésostructuré de départ (US 6 669 924). Une deuxième technique de synthèse consiste à mettre en présence une solution colloïdale de germes de zéolithes avec un agent structurant habituellement utilisé pour créer une mésostructuration du matériau final. L'élaboration d'une matrice inorganique à mésoporosité organisée et la croissance au sein de cette matrice des germes de zéolithes, de façon à obtenir un matériau aluminosilicate mésostructuré présentant des parois (ou murs) cristallisées, sont simultanées (Z. Zhang, Y. Han, F. Xiao, S. Qiu, L. Zhu, R. Wang, Y. Yu, Z. Zhang, B. Zou, Y. Wang, H. Sun, D. Zhao, Y. Wei, J. Am. Chem. Soc., 2001, 123, 5014 ; Y. Liu, W. Zhang, T. J. Pinnavaia, J. Am. Chem., Soc., 2000, 122, 8791). Une variante à ces deux techniques consiste initialement dans la préparation d'un mélange de précurseurs d'aluminium et de silicium en présence de deux agents structurants, l'un susceptible de générer un système zéolithique, l'autre susceptible de générer une mésostructuration. Cette solution est ensuite soumise à deux étapes de cristallisation à l'aide de conditions de traitement hydrothermale variables, une première étape qui conduit à la formation de la structure mésoporeuse à porosité organisée et une deuxième étape qui conduit à la zéolithisation des parois (ou murs) amorphes (A. Karlsson, M. Stöcker, R. Schmidt, Micropor. Mesopor. Mater., 1999, 27, 181). L'ensemble de ces méthodes de synthèse présente l'inconvénient d'endommager la structure mésoporeuse et donc de perdre les avantages de celle-ci dans le cas où la croissance des germes de zéolithes ou la zéolithisation des parois n'est pas parfaitement maîtrisée, ce qui rend ces techniques délicates à mettre en oeuvre. Il est possible d'éviter ce phénomène en élaborant directement des matériaux composites mésostructurés/zéolithes. Ceci peut se faire par traitement thermique d'un mélange d'une solution de germes de zéolithes et d'une solution de germes d'aluminosilicates mésostructurés (P. Prokesova, S. Mintova, J. Cejka, T. Bein, Micropor. Mesopor. Mater., 2003, 64, 165) ou bien par croissance d'une couche de zéolithe à la surface d'un aluminosilicate mésostructuré pré-synthétisé (D. T. On, S. Kaliaguine, Angew. Chem. Int. Ed., 2002, 41, 1036). D'un point de vue expérimental, à l'inverse des techniques "dip-coating" ou "aérosol" décrites préalablement, les matériaux aluminosilicates à porosité hiérarchisée ainsi définis ne sont pas obtenus par une concentration progressive des précurseurs inorganiques et de(s) l'agent(s) structurant(s) au sein de la solution où ils sont présents mais sont classiquement obtenus par précipitation directe au sein d'une solution aqueuse ou dans des solvants polaires en jouant sur la valeur de la concentration micellaire critique de l'agent structurant. De plus, la synthèse de ces matériaux obtenue par précipitation nécessite une étape de mûrissement en autoclave puisqu'ils peuvent se retrouver dans le surnageant. Les particules élémentaires habituellement obtenues ne présentent pas de forme régulière et sont caractérisées généralement par une taille variant généralement entre 200 et 500 nm et parfois plus.

### Résumé de l'invention

L'invention concerne un matériau à porosité hiérarchisée constitué d'au moins deux particules sphériques élémentaires, chacune desdites particules sphériques comprenant des nanocristaux zéolithiques ayant une taille de pores comprise entre 0,2 et 2 nm et une matrice à base d'oxyde de silicium, mésostructurée, ayant une taille de pores comprise entre 1,5 et 30 nm et présentant des parois amorphes d'épaisseur comprise entre 1 et 20 nm, lesdites particules sphériques élémentaires ayant un diamètre maximal de 10 µm. Ladite matrice à base d'oxyde de silicium comprend éventuellement, en outre, au moins un élément X choisi dans le groupe constitué par l'aluminium, le titane, le tungstène, le zirconium, le gallium, le germanium, le phosphore, l'étain, l'antimoine, le plomb, le vanadium, le fer, le manganèse, l'hafnium, le niobium, le tantale et l'yttrium, de préférence dans le groupe constitué par l'aluminium, le titane, le zirconium, le niobium, le germanium et le gallium et de façon plus préférée l'aluminium. La présente invention concerne également la préparation du matériau selon l'invention. Un premier procédé de préparation du matériau selon l'invention comprend a) la synthèse, en présence d'un agent structurant, de nanocristaux zéolithiques de taille nanométrique maximale égale à 300 nm afin d'obtenir une solution colloïdale dans laquelle sont dispersés lesdits nanocristaux ; b) le mélange en solution d'au moins un tensioactif, d'au moins un précurseur silicique, éventuellement d'au moins un précurseur d'au moins un élément X choisi dans le groupe constitué par l'aluminium, le titane, le tungstène, le zirconium, le gallium, le germanium, le phosphore, l'étain, l'antimoine, le plomb, le vanadium, le fer, le manganèse, l'hafnium, le niobium, le tantale et l'yttrium, et d'au moins une solution colloïdale obtenue selon a) ; c) l'atomisation par aérosol de ladite solution obtenue à l'étape b) pour conduire à la formation de gouttelettes sphériques de diamètre inférieur à 200 µm; d) le séchage desdites gouttelettes et e) l'élimination dudit agent structurant et dudit tensioactif pour l'obtention d'un matériau à porosité hiérarchisée. Un deuxième procédé de préparation du matériau selon l'invention comprend a') le mélange dans une solution d'au moins un tensioactif, d'au moins un précurseur silicique, éventuellement d'au moins un précurseur d'au moins un élément X choisi dans le groupe constitué par l'aluminium, le titane, le tungstène, le zirconium, le gallium, le germanium, le phosphore, l'étain, l'antimoine, le plomb, le vanadium, le fer, le manganèse, l'hafnium, le niobium, le tantale et l'yttrium, et de cristaux zéolithiques se dispersant sous la forme de nanocristaux de taille nanométrique maximale égale à 300 nm dans ladite solution ; b') l'atomisation par aérosol de ladite solution obtenue à l'étape a') pour conduire à la formation de gouttelettes sphériques de diamètre inférieur à 200 µm; c') le séchage desdites gouttelettes et d') l'élimination d'au moins dudit tensioactif. La structure ordonnée de la matrice du matériau selon l'invention est consécutive au phénomène de micellisation ou d'auto-assemblage par évaporation induit par la technique dite aérosol.

### Intérét de l'invention

Le matériau selon l'invention qui comprend une matrice inorganique mésostructurée, à base d'oxyde de silicium, aux parois amorphes dans laquelle sont piégés des nanocristaux zéolithiques présente simultanément les propriétés structurales, texturales et d'acido-basicité propres aux matériaux de la famille des zéolithes et aux matériaux à base d'oxyde de silicium, plus précisément aux matériaux aluminosilicates, mésostructurés. L'élaboration à l'échelle du nanomètre d'un matériau composite à base de silicium mésostructurés/zéolithes conduit à une connexion privilégiée des zones microporeuses et mésosporeuses au sein d'une même particule sphérique. De plus, le matériau selon l'invention étant constitué de particules élémentaires sphériques, le diamètre de ces particules variant avantageusement de 50 nm à 10 µm et de préférence de 50 à 300 nm, la taille limitée de ces particules ainsi que leur forme homogène permet d'avoir une meilleure diffusion des réactifs et des produits de la réaction lors de l'emploi du matériau selon l'invention dans des applications industrielles potentielles comparativement à des matériaux connus de l'état de la technique se présentant sous la forme de particules élémentaires de forme non homogène, c'est-à-dire irrégulière, et de taille très supérieure à 500 nm. D'autre part, les procédés de préparation du matériau selon l'invention qui consiste à faire interagir, préférentiellement en milieu acide, au moins un tensioactif, ionique ou non ionique, avec au moins un précurseur silicique, éventuellement au moins un précurseur d'au moins un élément X choisi dans le groupe constitué par l'aluminium, le titane, le tungstène, le zirconium, le gallium, le germanium, le phosphore, l'étain, l'antimoine, le plomb, le vanadium, le fer, le manganèse, l'hafnium, le niobium, le tantale et l'yttrium, de préférence dans le groupe constitué par l'aluminium, le titane, le zirconium, le niobium, le germanium et le gallium et de façon plus préférée l'aluminium et soit au moins une solution colloïdale dans laquelle sont dispersés des nanocristaux zéolithiques de taille nanométrique au maximum égale à 300 nm soit des cristaux zéolithiques se dispersant sous la forme de nanocristaux de taille nanométrique maximale égale à 300 nm dans une solution, préférentiellement acide. La structure ordonnée du matériau étant consécutive au phénomène de micellisation ou d'auto-assemblage par évaporation induit par la technique dite aérosol, permet d'élaborer de façon aisée des matériaux à porosité hiérarchisée sans endommager la nature de la phase mésostructurée ni celle de la phase zéolithique et de travailler avec une large gamme de nanocristaux de zéolithes quels que soient leurs procédés de synthèse initiaux. En effet, on peut utiliser des cristaux zéolithiques de taille bien supérieure à 300 nm dès lors qu'ils ont la propriété de se disperser en solution, notamment en solution acide et très préférentiellement en solution aquo-organique acide, sous la forme de nanocristaux de taille nanométrique maximale égale à 300 nm. Par ailleurs, par rapport aux synthèses connues des aluminosilicates mésostructurés, la production du matériau selon l'invention est réalisée en continu et la durée de préparation est réduite (quelques heures contre de 12 à 24 heures en utilisant l'autoclavcage).

### Exposé de l'invention

La présente invention a pour objet un matériau à porosité hiérarchisée constitué d'au moins deux particules sphériques élémentaires, chacune desdites particules sphériques comprenant des nanocristaux zéolithiques ayant une taille de pores comprise entre 0,2 et 2 nm et une matrice à base d'oxyde de silicium, mésostructurée, ayant une taille de pores comprise entre 1,5 et 30 nm et présentant des parois amorphes d'épaisseur comprise entre 1 et 20 nm, lesdites particules sphériques élémentaires ayant un diamètre maximal de 10 µm.

Par matériau à porosité hiérarchisée, on entend au sens de la présente invention un matériau présentant une double porosité à l'échelle de chacune desdites particules sphériques : une mésoporosité, c'est-à-dire une porosité organisée à l'échelle des mésopores ayant une taille uniforme comprise entre 1,5 et 30 nm et de préférence entre 1,5 et 10 nm, répartis de façon homogène et régulière dans chacune desdites particules (mésostructuration) et une microporosité de type zéolithique dont les caractéristiques (type structural de la zéolithe, composition chimique de la charpente zéolithique) sont fonction du choix des nanocristaux zéolithiques. Le matériau selon l'invention présente également une macroporosité texturale intraparticulaire. Il est à noter qu'une porosité de nature microporeuse peut également résulter de l'imbrication du tensioactif, utilisé lors de la préparation du matériau selon l'invention, avec la paroi inorganique au niveau de l'interface organique-inorganique développée lors de la mésostructuration de la composante inorganique dudit matériau selon l'invention. Conformément à l'invention, les nanocristaux zéolithiques présentent une taille de pores comprise entre 0,2 et 2 nm, de préférence entre 0,2 et 1 nm et de manière très préférée entre 0,2 et 0,6 nm. Lesdits nanocristaux génèrent la microporosité dans chacune des particules sphériques élémentaires constituant le matériau selon l'invention.

La matrice à base d'oxyde de silicium, comprise dans chacune des particules sphériques constituant le matériau selon l'invention, est mésostructurée : elle présente des mésopores ayant une taille uniforme comprise entre 1,5 et 30 nm et de préférence entre 1,5 et 10 nm, répartis de façon homogène et régulière dans chacune desdites particules. La matière située entre les mésopores de chacune desdites particules sphériques est amorphe et forme des parois, ou murs, dont l'épaisseur est comprise entre 1 et 20 nm. L'épaisseur des parois correspond à la distance séparant un pore d'un autre pore. L'organisation de la mésoporosité décrite ci-dessus conduit à une structuration de la matrice à base d'oxyde de silicium, laquelle peut être hexagonale, vermiculaire ou cubique et de façon préférée vermiculaire.

Selon un mode particulier du matériau selon l'invention, la matrice à base d'oxyde de silicium, mésostructurée, est entièrement silicique. Selon un autre mode particulier du matériau selon l'invention, la matrice à base d'oxyde de silicium, mésostructurée, comprend en outre au moins un élément X choisi dans le groupe constitué par l'aluminium, le titane, le tungstène, le zirconium, le gallium, le germanium, le phosphore, l'étain, l'antimoine, le plomb, le vanadium, le fer, le manganèse, l'hafnium, le niobium, le tantale et l'yttrium, de préférence dans le groupe constitué par l'aluminium, le titane, le zirconium, le niobium, le germanium et le gallium et de façon plus préférée l'aluminium. De préférence, l'élément X est l'aluminium : la matrice du matériau selon l'invention est dans ce cas un aluminosilicate. Ledit aluminosilicate présente un rapport molaire Si/Al au moins égal à 1, de préférence compris entre 1 et 1000 et de manière très préférée compris entre 1 et 100.

Conformément à l'invention, les nanocristaux zéolithiques représentent avantageusement de 0,1 à 30% poids, de préférence de 0,1 à 20% poids et de manière très préférée de 0,1 à 10% poids du matériau de l'invention. Toute zéolithe et en particulier mais de façon non restrictive celles répertoriées dans "Atlas of zeolite framework types", 5^{th} revised Edition, 2001, Ch.Baerlocher, W.M.Meier, D.H.Olson peut être employée dans les nanocristaux zéolithiques présents dans chacune des particules sphériques élémentaires constituant le matériau selon l'invention. Les nanocristaux zéolithiques comprennent de préférence au moins une zéolithe choisie parmi les zéolithes ZSM-5, ZSM-48, ZSM-22, ZSM-23, ZBM-30, EU-2, EU-11, Silicalite, Bêta, zéolithe A, Faujasite, Y, USY, VUSY, SDUSY, mordénite, NU-87, NU-88, NU-86, NU-85, IM-5, IM-12, Ferriérite et EU-1. De manière très préférée, les nanocristaux zéolithiques comprennent au moins une zéolithe choisie parmi les zéolithes de type structural MFI, BEA, FAU, et LTA. Des nanocristaux de différentes zéolithes et notamment de zéolithes de type structuraux différents peuvent être présents dans chacune des particules sphériques constituant le matériau selon l'invention. En particulier, chacune des particules sphériques constituant le matériau selon l'invention peut comprendre de manière avantageuse au moins des premiers nanocristaux zéolithiques dont la zéolithe est choisie parmi les zéolithes ZSM-5, ZSM-48, ZSM-22, ZSM-23, ZBM-30, EU-2, EU-11, Silicalite, Bêta, zéolithe A, Faujasite, Y, USY, VUSY, SDUSY, mordénite, NU-87, NU-88, NU-86, NU-85, IM-5, IM-12, Ferriérite et EU-1, de préférence parmi les zéolithes de type structural MFI, BEA, FAU, et LTA et au moins des seconds nanocristaux zéolithiques dont la zéolithe est différente de celle des premiers nanocristaux zéolithiques et est choisie parmi les zéolithes ZSM-5, ZSM-48, ZSM-22, ZSM-23, ZBM-30, EU-2, EU-11, Silicalite, Bêta, zéolithe A, Faujasite, Y, USY, VUSY, SDUSY, mordénite, NU-87, NU-88, NU-86, NU-85, IM-5, IM-12, Ferriérite et EU-1, de préférence parmi les zéolithes de type structural MFI, BEA, FAU, et LTA. Les nanocristaux zéolithiques comprennent avantageusement au moins une zéolithe soit entièrement silicique soit contenant, outre du silicium, au moins un élément T choisi parmi l'aluminium, le fer, le bore, l'indium et le gallium, de préférence l'aluminium.

Conformément à l'invention, lesdites particules sphériques élémentaires constituant le matériau selon l'invention ont un diamètre avantageusement compris entre 50 et 10 µm de préférence entre 50 et 300 nm. Plus précisément, elles sont présentes dans le matériau selon l'invention sous la forme d'aggrégats.

Le matériau selon l'invention présente avantageusement une surface spécifique comprise entre 100 et 1100 m²/g et de manière très avantageuse comprise entre 400 et 800 m²/g.

La présente invention a également pour objet la préparation du matériau selon l'invention. Elle se propose de fournir deux procédés de préparation du matériau selon l'invention. Un premier mode de réalisation du procédé de préparation du matériau selon l'invention appelé par la suite "premier procédé de préparation selon l'invention" comprend : a) la synthèse, en en présence d'un agent structurant, de nanocristaux zéolithiques de taille nanométrique maximale égale à 300 nm afin d'obtenir une solution colloïdale dans laquelle sont dispersés lesdits nanocristaux ; b) le mélange en solution d'au moins un tensioactif, d'au moins un précurseur silicique, éventuellement d'au moins un précurseur d'au moins un élément X choisi dans le groupe constitué par l'aluminium, le titane, le tungstène, le zirconium, le gallium, le germanium, le phosphore, l'étain, l'antimoine, le plomb, le vanadium, le fer, le manganèse, l'hafnium, le niobium, le tantale et l'yttrium, et d'au moins une solution colloïdale obtenue selon a) ; c) l'atomisation par aérosol de la solution obtenue à l'étape b) pour conduire à la formation de gouttelettes sphériques de diamètre inférieur à 200 µm ; d) le séchage desdites gouttelettes et e) l'élimination dudit agent structurant et dudit tensioactif pour l'obtention d'un matériau à porosité hiérarchisée.

Conformément à l'étape a) du premier procédé de préparation selon l'invention, les nanocristaux zéolithiques sont synthétisés selon des protocoles opératoires connus de l'Homme du métier. En particulier, la synthèse de nanocristaux de zéolithe Bêta a été décrite par T. Bein et coll., Micropor. Mesopor. Mater., 2003, 64, 165. La synthèse de nanocristaux de zéolithe Y a été décrite par T. J. Pinnavaia et coll., J. Am. Chem. Soc., 2000, 122, 8791. La synthèse de nanocristaux de zéolithe faujasite a été décrite dans Kloetstra et coll., Microporous Mater., 1996, 6, 287 ; La synthèse de nanocristaux de zéolithe ZSM-5 a été décrite par R. Mokaya et coll., J. Mater. Chem., 2004, 14, 863. La synthèse de nanocristaux de silicalite (ou de type structural MFI) a été décrite par R. de Ruiter et coll., Synthesis of Microporous Materials, Vol. I, M. L. Occelli, H. E. Robson (eds.), Van Nostrand Reinhold, New York, 1992, 167 et est donnée dans l'exemple 1 de la présente demande.

On synthétise généralement des nanocristaux zéolithiques en préparant un mélange réactionnel renfermant au moins une source silicique, éventuellement au moins une source d'au moins un élément T choisi parmi l'aluminium, le fer, le bore, l'indium et le gallium, de préférence au moins une source aluminique, et au moins un agent structurant. Le mélange réactionnel est soit aqueux soit aquo-organique, par exemple un mélange eau-alcool. Le mélange réactionnel est avantageusement mis sous conditions hydrothermales sous une pression autogène, éventuellement en ajoutant du gaz, par exemple de l'azote, à une température comprise entre 50 et 200°C, de préférence entre 60 et 170°C et de manière encore préférentielle à une température qui ne dépasse pas 120°C jusqu'à la formation de nanocristaux zéolithiques. A l'issue dudit traitement hydrothermal, on obtient une solution colloïdale dans laquelle les nanocristaux se trouvent à l'état dispersé. L'agent structurant peut être ionique ou neutre selon la zéolithe à synthétiser. Il est fréquent d'utiliser les agents structurants de la liste non exhaustive suivante : des cations organiques azotés, des éléments de la famille des alcalins (Cs, K, Na, etc.), des éthercouronnes, des diamines ainsi que tout autre agent structurant bien connu de l'Homme de l'Art.

Selon l'étape b) du premier procédé de préparation selon l'invention, l'élément X est de préférence choisi dans le groupe constitué par l'aluminium, le titane, le zirconium, le niobium, le germanium et le gallium et de façon plus préférée X est l'aluminium.

Dans un deuxième mode de réalisation du procédé de préparation du matériau selon l'invention appelé par la suite "deuxième procédé de préparation selon l'invention", on utilise initialement des cristaux zéolithiques, qui présentent la caractéristique de se disperser sous la forme de nanocristaux de taille nanométrique maximale égale à 300 nm en solution, par exemple en solution aquo-organique acide. Le deuxième procédé de préparation selon l'invention comprend a') le mélange en solution d'au moins un tensioactif, d'au moins un précurseur silicique, éventuellement d'au moins un précurseur d'au moins un élément X choisi dans le groupe constitué par l'aluminium, le titane, le tungstène, le zirconium, le gallium, le germanium, le phosphore, l'étain, l'antimoine, le plomb, le vanadium, le fer, le manganèse, l'hafnium, le niobium, le tantale et l'yttrium, et de cristaux zéolithiques se dispersant sous la forme de nanocristaux de taille nanométrique maximale égale à 300 nm dans ladite solution ; b') l'atomisation par aérosol de ladite solution obtenue à l'étape a') pour conduire à la formation de gouttelettes sphériques de diamètre inférieur à 200 µm ; c') le séchage desdites gouttelettes et d') l'élimination d'au moins dudit tensioactif.

Dans l'étape a') du deuxième procédé de préparation selon l'invention, on utilise des cristaux zéolithiques. Toute zéolithe cristallisée connue dans l'état de la technique qui a la propriété de se disperser en solution, par exemple en solution aquo-organique acide, sous la forme de nanocristaux de taille nanométrique maximale égale à 300 nm convient pour la mise en oeuvre de l'étape a'). Lesdits cristaux zéolithiques sont synthétisés par des méthodes connues de l'homme du métier. Les cristaux zéolithiques utilisés dans l'étape a') peuvent être déjà sous la forme de nanocristaux. On utilise aussi avantageusement des cristaux zéolithiques de taille supérieure à 300 nm, par exemple comprise entre 300 nm et 200 µm qui se dispersent en solution, par exemple en solution aquo-organique, préférentiellement en solution aquo-organique acide, sous la forme de nanocristaux de taille nanométrique maximale égale à 300 nm. L'obtention de cristaux zéolithiques se dispersant sous la forme de nanocristaux de taille nanométrique maximale égale à 300 nm est également possible en réalisant une fonctionnalisation de la surface des nanocristaux. L'élément X est de préférence choisi dans le groupe constitué par l'aluminium, le titane, le zirconium, le niobium, le germanium et le gallium et de façon plus préférée X est l'aluminium. Les cristaux zéolithiques utilisés se trouvent soit sous leur forme brute de synthèse, c'est-à-dire contenant encore l'agent structurant, soit sous leur forme calcinée, c'est-à-dire débarrassés dudit agent structurant. Lorsque les cristaux zéolithiques utilisés sont sous leur forme brute de synthèse, ledit agent structurant est éliminé au cours de l'étape d') du deuxième procédé de préparation selon l'invention.

Conformément aux deux procédés de préparation du matériau selon l'invention, le précurseur silicique et éventuellement le précurseur d'au moins un élément X, de préférence le précurseur aluminique, utilisés dans l'étape b) du premier procédé de préparation selon l'invention, respectivement dans l'étape a') du deuxième procédé de préparation selon l'invention, sont des précurseurs d'oxydes inorganiques bien connus de l'Homme du métier. Le précurseur silicique est obtenu à partir de toute source de silice et avantageusement d'un précurseur silicate de sodium de formule SiO₂,NaOH, d'un précurseur chloré de formule SiCl₄, d'un précurseur organométallique de formule Si(OR)₄ où R = H, méthyle, éthyle ou d'un précurseur chloroalcoxyde de formule Si(OR)₄₋ₓClₓ où R = H, méthyle, éthyle, x étant compris entre 0 et 4. Le précurseur silicique peut également avantageusement être un précurseur organométallique de formule Si(OR)₄₋ₓR'ₓ où R = H, méthyle, éthyle et R' est une chaîne alkyle ou une chaîne alkyle fonctionnalisée, par exemple par un groupement thiol, amino, β dicétone ou acide sulfonique, x étant compris entre 0 et 4. Le précurseur de l'élément X peut être tout composé comprenant l'élément X et pouvant libérer cet élément en solution, par exemple en solution aquo-organique, préférentiellement en solution aquo-organique acide, sous forme réactive. Dans le cas préféré où X est l'aluminium, le précurseur aluminique est avantageusement un sel inorganique d'aluminium de formule AlZ₃, Z étant un halogène ou le groupement NO₃. De préférence, Z est le chlore. Le précurseur aluminique peut être aussi un précurseur organométallique de formule Al(OR")₃ ou R" = éthyle, isopropyle, n-butyle, s-butyle ou t-butyle ou un précurseur chélaté tel que l'aluminium acétylacétonate (Al(CH₇O₂)₃). Le précurseur aluminique peut aussi être un oxyde ou un hydroxyde d'aluminium.

Le tensioactif utilisé pour la préparation du mélange selon l'étape b) du premier procédé de préparation selon l'invention ou l'étape a') du deuxième procédé de préparation selon l'invention est un tensioactif ionique ou non ionique ou un mélange des deux. De préférence, le tensioactif ionique est choisi parmi les ions phosphonium ou ammonium et très préférentiellement parmi les sels d'ammonium quaternaire comme le bromure de céthyltriméthylammonium (CTAB). De préférence, le tensioactif non ionique peut être tout copolymère possédant au moins deux parties de polarités différentes leur conférant des propriétés de macromolécules amphiphiles. Ces copolymères peuvent faire partie de la liste non exhaustive des familles de copolymères suivantes : les copolymères fluorés (-[CH₂-CH₂₋CH₂-CH₂-O-CO-R1- avec R1 = C₄F₉, C₈F₁₇, etc.), les copolymères biologiques comme les polyacides aminés (poly-lysine, alginates, etc.), les dendrimères, les copolymères bloc constitués de chaînes de poly(oxyde d'alkylène) et tout autre copolymère à caractère amphiphile connu de l'Homme du métier (S. Förster, M. Antionnetti, Adv.Mater, 1998, 10, 195-217, S. Förster, T.Plantenberg, Angew. Chem. Int. Ed, 2002, 41, 688-714, H. Cölfen, Macromol. Rapid Commun, 2001, 22, 219-252).

De manière préférée, on utilise dans le cadre de la présente invention un copolymère bloc constitué de chaînes de poly(oxyde d'alkylène). Ledit copolymère bloc est de préférence un copolymère bloc ayant deux, trois ou quatre blocs, chaque bloc étant constitué d'une chaîne de poly(oxyde d'alkylène). Pour un copolymère à deux blocs, l'un des blocs est constitué d'une chaîne de poly(oxyde d'alkylène) de nature hydrophile et l'autre bloc est constitué d'une chaîne de poly(oxyde d'alkylène) de nature hydrophobe. Pour un copolymère à trois blocs, deux des blocs sont constitués d'une chaîne de poly(oxyde d'alkylène) de nature hydrophile tandis que l'autre bloc, situé entre les deux blocs aux parties hydrophiles, est constitué d'une chaîne de poly(oxyde d'alkylène) de nature hydrophobe. De préférence, dans le cas d'un copolymère à trois blocs, les chaînes de poly(oxyde d'alkylène) de nature hydrophile sont des chaînes de poly(oxyde d'éthylène) notées (PEO)ₓ et (PEO)_{z} et les chaînes de poly(oxyde d'alkylène) de nature hydrophobe sont des chaînes de poly(oxyde de propylène) notées (PPO)_{y}, des chaînes de poly(oxyde de butylène), ou des chaînes mixtes dont chaque chaîne est un mélange de plusieurs monomères d'oxyde d'alkylène. De manière très préférée, dans le cas d'un copolymère à trois blocs, on utilise un composé de formule (PEO)ₓ-(PPO)_{y}-(PEO)_{z} où x est compris entre 5 et 106 et y est compris entre 33 et 70 et z est compris entre 5 et 106. De préférence, les valeurs de x et z sont identiques. On utilise très avantageusement un composé dans lequel x = 20, y = 70 et z = 20 (P123) et un composé dans lequel x = 106, y = 70 et z = 106 (F127). Les tensioactifs non-ioniques commerciaux connus sous le nom de Pluronic (BASF), Tetronic (BASF), Triton (Sigma), Tergitol (Union Carbide), Brij (Aldrich) sont utilisables en tant que tensioactifs non-ioniques dans l'étape b) du premier procédé de préparation de l'invention, respectivement dans l'étape a') du deuxième procédé de préparation de l'invention. Pour un copolymère à quatre blocs, deux des blocs sont constitués d'une chaîne de poly(oxyde d'alkylène) de nature hydrophile et les deux autres blocs sont constitués d'une chaîne de poly(oxydes) d'alkylène de nature hydrophobe.

La solution dans laquelle sont mélangés au moins un précurseur silicique, éventuellement au moins un précurseur d'au moins un élément X, de préférence un précurseur aluminique, au moins un tensioactif et, selon l'étape b) du premier procédé de préparation selon l'invention, la solution colloïdale dans laquelle sont dispersés lesdits nanocristaux zéolithiques préalablement synthétisés, respectivement selon l'étape a') du deuxième procédé de préparation selon l'invention des cristaux zéolithiques se dispersant, dans ladite solution, sous la forme de nanocristaux de taille nanométrique maximale égale à 300 nm, peut être acide, neutre ou basique. De préférence, ladite solution est acide et présente un pH maximal égal à 2, de préférence compris entre 0 et 2. Les acides utilisés pour obtenir une solution acide de pH maximal égal à 2 sont, de façon non exhaustive, l'acide chlorhydrique, l'acide sulfurique et l'acide nitrique. Ladite solution peut être aqueuse ou peut être un mélange eau-solvant organique, le solvant organique étant préférentiellement un solvant polaire, notamment un alcool, préférentiellement de l'éthanol. Ladite solution peut aussi être pratiquement organique, de préférence pratiquement alcoolique, la quantité d'eau étant telle que l'hydrolyse des précurseurs inorganiques est assurée (quantité stoechiométrique). De manière très préférée, ladite solution dans laquelle sont mélangés au moins un précurseur silicique, éventuellement au moins un précurseur d'au moins un élément X, de préférence un précurseur aluminique, au moins un tensioactif et, selon l'étape b) du premier procédé de préparation selon l'invention, la solution colloïdale dans laquelle sont dispersés lesdits nanocristaux zéolithiques préalablement synthétisés, respectivement selon l'étape a') du deuxième procédé de préparation selon l'invention des cristaux zéolithiques se dispersant, dans ladite solution, sous la forme de nanocristaux de taille nanométrique maximale égale à 300 nm, est un mélange aquo-organique acide, très préférentiellement un mélange eau acide-alcool.

Dans le cas préféré où la matrice du matériau selon l'invention contient de l'aluminium, les concentrations en précurseurs silicique et aluminique dans l'étape b) du premier procédé de préparation selon l'invention, respectivement dans l'étape a') du deuxième procédé de préparation selon l'invention sont définies par le rapport molaire Si/Al, celui-ci étant au moins égal à 1, de préférence compris entre 1 et 1000, et de manière très préférée compris entre 1 et 100. La quantité de nanocristaux zéolithiques dispersés dans la solution colloïdale introduite au cours de l'étape b) du premier procédé de préparation selon l'invention, respectivement celle des cristaux zéolithiques introduits au cours de l'étape a') du deuxième procédé de préparation selon l'invention est telle que les nanocristaux zéolithiques représentent avantageusement de 0,1 à 30% poids, de préférence de 0,1 à 20% poids et de manière très préférée de 0,1 à 10% poids du matériau de l'invention.

La concentration initiale en tensioactif introduit dans le mélange conformément à l'étape b) du premier procédé de préparation selon l'invention, respectivement à l'étape a') du deuxième procédé de préparation selon l'invention est définie par c₀ et c₀ est définie par rapport à la concentration micellaire critique (c_{mc}) bien connue de l'Homme du Métier. La c_{mc} est la concentration limite au delà de laquelle se produit le phénomène d'auto-arrangemant des molécules du tensioactif dans la solution. La concentration c₀ peut être inférieure, égale ou supérieure à la c_{mc}, de préférence elle est inférieure à la c_{mc}. Dans une mise en oeuvre préférée de l'un ou l'autre des procédés selon l'invention, la concentration c₀ est inférieure à la c_{mc} et ladite solution visée à l'étape b) du premier procédé de préparation selon l'invention, respectivement à l'étape a') du deuxième procédé de préparation selon l'invention est un mélange eau acide-alcool.

L'étape d'atomisation du mélange selon l'étape c) du premier procédé de préparation selon l'invention, respectivement selon l'étape b') du deuxième procédé de préparation selon l'invention produit des gouttelettes sphériques de diamètre préférentiellement compris dans la gamme de 2 à 200 µm. La distribution en taille de ces gouttelettes est de type lognormale. Le générateur d'aérosol utilisé ici est un appareil commercial de modèle 3078 fourni par TSI. L'atomisation de la solution se fait dans une chambre dans laquelle est envoyé un gaz vecteur, un mélange O₂/N₂ (air sec), sous une pression P égale à 1,5 bars. Conformément à l'étape d) du premier procédé de préparation selon l'invention, respectivement à l'étape c') du deuxième procédé de préparation selon l'invention, on procède au séchage desdites gouttelettes. Ce séchage est réalisé par le transport desdites gouttelettes via le gaz vecteur, le mélange O₂/N₂, dans des tubes en verre, ce qui conduit à l'évaporation progressive de la solution, par exemple de la solution aquo-organique acide, et ainsi à l'obtention de particules élémentaires sphériques. Ce séchage est parfait par un passage desdites particules dans un four dont la température peut être ajustée, la gamme habituelle de température variant de 50 à 600°C et de préférence de 80 à 400°C, le temps de résidence de ces particules dans le four étant de l'ordre de 3 à 4 secondes. Les particules sont alors récoltées dans un filtre et constituent le matériau selon l'invention. Une pompe placée en fin de circuit favorise l'acheminement des espèces dans le dispositif expérimental aérosol.

Dans le cas où la solution visée à l'étape b) du premier procédé de préparation selon l'invention, respectivement à l'étape a') du deuxième procédé de préparation selon l'invention est un mélange eau-solvant organique, de préférence acide, il est essentiel au cours de l'étape b) du premier procédé de préparation selon l'invention, respectivement de l'étape a') du deuxième procédé de préparation selon l'invention que la concentration en tensioactif à l'origine de la mésostructuration de la matrice soit inférieure à la concentration micellaire critique de sorte que l'évaporation de ladite solution aquo-organique, préférentiellement acide, au cours de l'étape c) du premier procédé de préparation selon l'invention, respectivement de l'étape b') du deuxième procédé de préparation selon l'invention par la technique d'aérosol induise un phénomène de micellisation ou d'auto-assemblage conduisant à la mésostructuration de la matrice du matériau selon l'invention autour des nanocristaux zéolithiques lesquels demeurent inchangés dans leur forme et leur taille au cours des étapes c) et d) du premier procédé de préparation de l'invention, respectivement b') et c') du deuxième procédé de préparation de l'invention. Lorsque c₀<c_{mc}, la mésostructuration de la matrice du matériau selon l'invention et préparé selon l'un ou l'autre des procédés décrits ci-dessus est consécutive à une concentration progressive, au sein de chaque gouttelette, du précurseur silicique, éventuellement du précurseur de l'élément X, de préférence du précurseur aluminique et du tensioactif, jusqu'à une concentration en tensioactif c>c_{mc} résultant d'une évaporation de la solution aquo-organique, préférentiellement acide.

De manière générale, l'augmentation de la concentration conjointe du précurseur silicique et éventuellement du précurseur de l'élément X, préférentiellement du précurseur aluminique, et du tensioactif provoque la précipitation du précurseur silicique et éventuellement du précurseur de l'élément X, préférentiellement du précurseur aluminique, autour du tensioactif auto-organisé et en conséquence la structuration de la matrice du matériau selon l'invention. Les interactions phases inorganique / inorganique, phases organique / organique et phases organique / inorganique conduisent par un mécanisme d'auto-assemblage coopératif à l'hydrolyse / condensation du précurseur silicique et éventuellement du précurseur de l'élément X, préférentiellement du précurseur aluminique, autour du tensioactif. Lors de ce phénomène d'auto-assemblage, les nanocristaux zéolitiques se retrouvent piégés dans la matrice à base d'oxyde de silicium, mésostructurée, comprise dans chacune des particules sphériques élémentaires constituant le matériau de l'invention. La technique aérosol est particulièrement avantageuse pour la mise en oeuvre de l'étape c) du premier procédé de préparation de l'invention, respectivement de l'étape b') du deuxième procédé de préparation de l'invention, de manière à contraindre les réactifs présents dans la solution initiale à interagir entre eux, aucune perte de matière hormis les solvants, c'est-à-dire la solution, préférentiellement la solution aqueuse, préférentiellement acide, et éventuellement additionnée d'un solvant polaire, n'étant possible, la totalité du silicium, éventuellement de l'élément X, et des nanocristaux zéolithiques présents initialement étant ainsi parfaitement conservée tout au long de chacun des procédés de l'invention au lieu d'être potentiellement éliminée lors des étapes de filtration et de lavages rencontrées dans des procédés de synthèse classiques connues de l'homme du métier. Le séchage des gouttelettes selon l'étape d) du premier procédé de préparation selon l'invention respectivement selon l'étape c') du deuxième procédé de préparation selon l'invention est avantageusement suivi d'un passage à l'étuve à une température comprise entre 50 et 150°C. L'élimination de l'agent structurant et du tensioactif conformément à l'étape e) du premier procédé de préparation selon l'invention, respectivement l'élimination d'au moins du tensioactif conformément à l'étape d') du deuxième procédé de préparation selon l'invention afin d'obtenir le matériau selon l'invention à porosité hiérarchisée est avantageusement réalisée par des procédés d'extraction chimique ou par traitement thermique et de préférence par calcination sous air dans une gamme de température de 300 à 1000°C et plus précisément dans une gamme de 500 à 600°C pendant une durée de 1 à 24 heures et de façon préférée pendant une durée de 2 à 6 heures.

Le matériau à porosité hiérarchisée de la présente invention peut être obtenu sous forme de poudre, de billes, de pastilles, de granulés, ou d'extrudés, les opérations de mises en forme étant réalisées par les techniques classiques connues de l'homme du métier. De préférence, le matériau à porosité hiérarchisée selon l'invention est obtenu sous forme de poudre, laquelle est constituée de particules sphériques élémentaires ayant un diamètre maximal de 10 µm, ce qui facilite la diffusion éventuelle des réactifs dans le cas de l'emploi du matériau selon l'invention dans une application industrielle potentielle.

Le matériau de l'invention à porosité hiérarchisée est caractérisé par plusieurs techniques d'analyses et notamment par Diffraction des Rayons X aux bas angles (DRX aux bas angles), par Diffraction des rayons X aux grands angles (DRX), par Isotherme d'adsorption d'azote, par Microscopie électronique à transmission (MET), par Analyses Elémentaires par fluorescence X.

La technique de Diffraction des Rayons X aux grands angles (valeurs de l'angle 2θ comprises entre 5 et 70°) permet de caractériser un solide cristallisé défini par la répétition d'un motif unitaire ou maille élémentaire à l'échelle moléculaire. Dans l'exposé qui suit, l'analyse des rayons X est réalisée sur poudre avec un diffractomètre opérant en réflexion et équipé d'un monochromateur arrière en utilisant la radiation du cuivre (longueur d'onde de 1,5406 Å). Les pics habituellement observés sur les diffractogrammes correspondants à une valeur donnée de l'angle 2θ sont associés aux distances inter-réticulaires d₍ₕₖₗ₎ caractéristiques de la (des) symétrie(s) structurale(s) du matériau, ((hkl) étant les indices de Miller du réseau réciproque) par la relation de Bragg : 2 d ₍ₕₖₗ₎ * sin (θ) = n * λ. Cette indexation permet alors la détermination des paramètres de maille (abc) du réseau direct.

L'analyse DRX aux grands angles est donc adaptée à la caractérisation structurale des nanocristaux zéolithiques présents dans chacune des particules sphériques élémentaires constituant le matériau selon l'invention. En particulier, elle permet d'accéder à la taille des pores des nanocristaux zéolithiques. Suivant le même principe, la technique de Diffraction des Rayons X aux bas angles (valeurs de l'angle 2θ comprises entre 0,5 et 3°) permet de caractériser la périodicité à l'échelle nanométrique générée par la mésoporosité organisée de la matrice à base d'oxyde de silicium, mésostructurée, du matériau de l'invention. La valeur des paramètres de mailles (abc) est fonction de la structure hexagonale, cubique ou vermiculaire obtenue. Pour exemple, les diffractogrammes de Rayons X grands et bas angles d'un matériau à porosité hiérarchisée obtenu selon l'un ou l'autre des procédés de l'invention constitué de nanocristaux de zéolithe du type ZSM-5 (MFI), la matrice mésostructurée étant purement silicique et obtenue via l'emploi du copolymère à bloc particulier dénommé poly(oxyde d'éthylène)₁₀₆-poly(oxyde de propylène)₇₀-poly(oxyde d'éthylène)₁₀₆ (PEO₁₀₆-PPO₇₀-PEO₁₀₆ ou F127) présentent respectivement le diffractogramme associé au groupe de symétrie Pnma (N°62) de la zéolithe ZSM-5 aux grands angles et un pic de corrélation parfaitement résolu aux petits angles associé à la structure de type vermiculaire de la matrice mésostructurée qui correspond à une distance d de corrélation entre pores. La valeur de l'angle obtenue sur le diffractogramme RX permet de remonter à la distance de corrélation d selon la loi de Bragg : 2 d * sin (θ) = n * λ.

Les valeurs des paramètres de maille a, b, c obtenues pour la caractérisation des nanocristaux de zéolithes sont cohérents avec les valeurs obtenues pour une zéolithe de type ZSM-5 (MFI) bien connues de l'homme de l'art ("Collection of simulated XRD powder patterns for zeolites", 4^{th} revised Edition, 2001, M. M. J. Treacy, J. B. Higgins).

L'analyse Isotherme d'adsorption d'azote correspondant à l'adsorption physique de molécules d'azote dans la porosité du matériau via une augmentation progressive de la pression à température constante renseigne sur les caractéristiques texturales (diamètre de pores, type de porosité, surface spécifique) particulières du matériau selon l'invention. En particulier, elle permet d'accéder à la surface spécifique et à la distribution mésoporeuse du matériau. On entend par surface spécifique, la surface spécifique B.E.T. (S_{BET} en m²/g) déterminée par adsorption d'azote conformément à la norme ASTM D 3663-78 établie à partir de la méthode BRUNAUER-EMMETT-TELLER décrite dans le périodique " The Journal of American Society", 60, 309, (1938). La distribution poreuse représentative d'une population de mésopores centrée dans une gamme de 1,5 à 50 nm est déterminée par le modèle Barrett-Joyner-Halenda (BJH). L'isotherme d'adsorption - désorption d'azote selon le modèle BJH est décrit dans le périodique "The Journal of American Society" , 73, 373, (1951) écrit par E.P.Barrett, L.G.Joyner et P.P.Halenda. Dans l'exposé qui suit, le diamètre des mésospores φ de la matrice mésostructurée donné correspond au diamètre moyen à la désorption d'azote défini comme étant un diamètre tel que tous les pores inférieurs à ce diamètre constituent 50% du volume poreux (Vp) mesuré sur la branche de désorption de l'isotherme azote. De plus, l'allure de l'isotherme d'adsorption d'azote et de la boude d'hystérésis peut renseigner sur la présence de microporosité liée aux nanocristaux zéolithiques et sur la nature de la mésoporosité. Pour exemple, l'Isotherme d'adsorption d'azote d'un matériau à porosité hiérarchisée obtenu selon l'un ou l'autre des procédés de l'invention constitué de nanocristaux de zéolithe du type ZSM-5 (MFI), la matrice mésostructurée étant purement silicique et obtenue via l'emploi du copolymère à bloc particulier dénommé poly(oxyde d'éthylène)₁₀₆-poly(oxyde de propylène)₇₀-poly(oxyde d'éthylène)₁₀₆ (PEO₁₀₆-PPO₇₀-PEO₁₀₆ ou F127) présente pour des faibles valeurs de P/P0 (où P0 est la pression de vapeur saturante à la température T) une isotherme de type I caractéristique d'un matériau microporeux et pour les valeurs de P/P0 plus élevées une isotherme de type IV ainsi qu'une boucle d'hystérésis de type H1, la courbe de distribution poreuse associée étant quant à elle représentative d'une population de mésopores de taille uniforme centrée dans une gamme de 1,5 à 50 nm. Concernant la matrice mésostructurée, la différence entre la valeur du diamètre des pores φ et la distance de corrélation entre pores d défini par DRX aux bas angles comme décrit ci-dessus permet d'accéder à la grandeur e où e = d - φ et est caractéristique de l'épaisseur des parois amorphes de la matrice mésostructurée du matériau selon l'invention.

L'analyse par microscopie électronique par transmission (MET) est une technique également largement utilisée pour caractériser la matrice mésostructurée du matériau de l'invention. Celle-ci permet la formation d'une image du solide étudié, les contrastes observés étant caractéristiques de l'organisation structurale, de la texture, de la morphologie ou bien de la composition zéolithes/mésostructurés des particules observées, la résolution de la technique atteignant au maximum 0,2 nm. Dans l'exposé qui suit, les photos MET seront réalisées à partir de sections microtomes de l'échantillon afin de visualiser une section d'une particule sphérique élémentaire du matériau selon l'invention. Pour exemple, les images MET obtenues pour un matériau aluminosilicate à porosité hiérarchisée obtenu selon l'un ou l'autre des procédés de l'invention constitué de nanocristaux de zéolithe du type ZSM-5 (MFI), la matrice mésostructurée étant purement silicique et obtenue via l'emploi du copolymère à bloc particulier dénommé F127 présentent au sein d'une même particule sphérique une mésostructure vermiculaire (la matière étant définie par des zones sombres) au sein de laquelle sont visualisés des objets plus ou moins sphériques opaques représentant les nanocristaux zéolithiques piégés dans la matrice mésostructurée. L'analyse de l'image permet également d'accéder aux paramètres d, φ et e, caractéristiques de la matrice mésostructurée définis précédemment. Il est possible de visualiser également sur ce même cliché les plans réticulaires des nanocristaux au lieu des objets opaques cités précédemment et de remonter ainsi à la structure de la zéolithe.

La morphologie et la distribution en taille des particules élémentaires ont été établies par analyse de photos obtenues par MEB.

La structure de la matrice mésostructurée du matériau selon l'invention peut être du type vermiculaire, cubique ou hexagonale en fonction de la nature du tensioactif choisi comme agent structurant.

L'invention est illustrée au moyen des exemples suivants.

### EXEMPLES

Dans les exemples qui suivent, la technique aérosol utilisée est celle décrite ci-dessus dans l'exposé de l'invention.

### Exemple 1 (invention) : Préparation d'un matériau à porosité hiérarchisée constitué de nanocristaux de zéolithes de type Silicalite (MFI) à 3,7% poids du matériau final et d'une matrice mésostructurée purement silicique.

6,0 g de TEOS (tétraéthylorthosilicate) sont hydrolysés dans 10,4 ml de solution d'hydroxyde de tetrapropylammonium (TPAOH 20%). 1,5 ml d'eau sont alors ajoutés et la solution est ensuite agitée de manière à obtenir une solution claire. La solution est autoclavée à T = 80°C pendant 4 jours. Une fois la synthèse terminée, les cristaux sont récupérés par centrifugation (20000 rpm pendant une heure), redispersés dans de l'eau (ultra-son) puis recentrifugés jusqu'à ce que la solution après redispersion ait un pH voisin de 7. Le pH de la suspension colloïdale de nanocristaux de silicalite-1 est ensuite ajusté à 9,5 par ajout d'une solution d'ammoniaque 0,1%. La taille moyenne des cristaux de Silicalite est de 100 nm. 400 µl de cette solution sont alors ajoutés à une solution contenant 30 g d'éthanol, 15 ml d'eau, 4,5 g de TEOS, 0,036 ml d'HCl et 1,4 g de tensioactif F127. Le pH de la solution est ajusté à 2. L'ensemble est envoyé dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bars). Les gouttelettes sont séchées selon le protocole décrit dans l'exposé de l'invention ci-dessus. La température du four de séchage est fixée à 350°C. La poudre récoltée est alors calcinée sous air pendant 5 h à T = 550°C. Le solide est caractérisé par DRX aux bas angles et aux grands angles, par isotherme d'adsorption d'azote, par MET et par fluorescence X. L'analyse MET montre que le matériau final est constitué de nanocristaux de zéolithe Silicalite piégés dans une matrice purement silicique à mésoporosité organisée caractérisée par une structure vermiculaire. L'analyse Isotherme d'adsorption d'azote conduit à une surface spécifique du matériau final de S_{BET} = 480 m²/g et à un diamètre mésoporeux caractéristique de la matrice mésostructurée purement silicique de φ = 6,2 nm. L'analyse DRX aux grands angles conduit à l'obtention du diffractogramme caractéristique de la zéolithe silicalite (taille des micopores, mesurée par DRX, de l'ordre de 0,55 nm). L'analyse DRX aux petits angles conduit à la visualisation d'un pic de corrélation associé à l'organisation vermiculaire de la matrice mésostructurée. La relation de Bragg donne 2 d * sin (0,3) = 1,5406, soit d = 15 nm. L'épaisseur des parois amorphes de la matrice mésostructurée purement silicique définie par e = d - φ est donc de e = 9 nm. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

### Exemple 2 (invention) : Préparation d'un matériau à porosité hiérarchisée constitué de nanocristaux de zéolithes de type ZSM-5 (MFI) à 3,7% poids du matériau final et d'une matrice mésostructurée purement silicique.

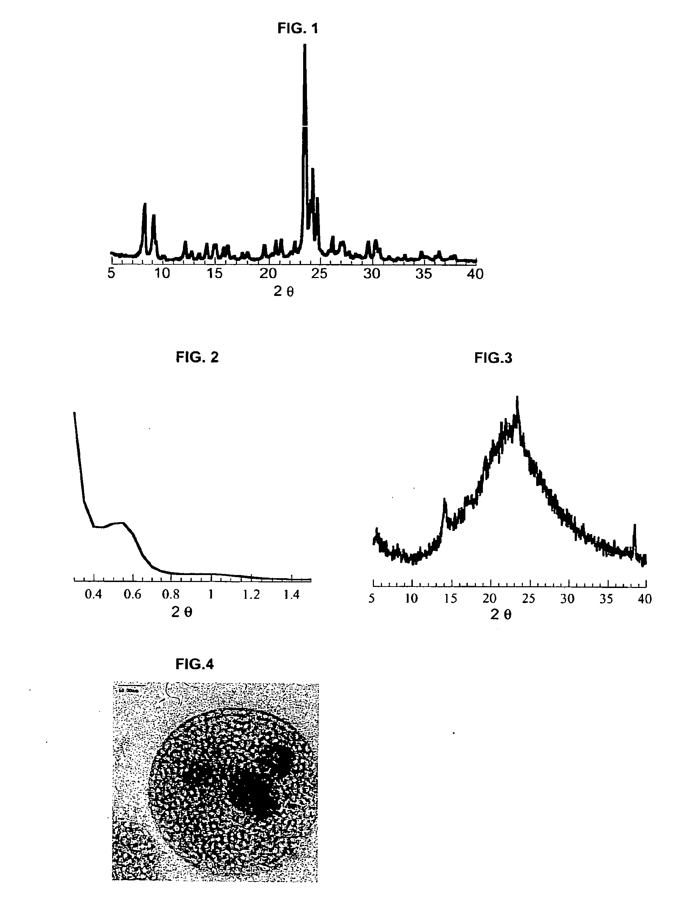

0,14g d'aluminium sec-butoxide sont ajoutés dans une solution contenant 7 g de solution de tetrapropylammonium (TPAOH 20%), 4,3 ml d'eau et 0,0092g de soude. 6g de TEOS (tétraéthylorthosilicate) sont alors additionnés à cette solution qui est alors agitée à température ambiante de manière à obtenir une solution claire. La solution est étuvée 18 heures à T = 95°C. On obtient alors une suspension colloïdale laiteuse blanche contenant des nanocristaux de ZSM-5 de taille moyenne de 130 nm. La figure 1 montre un diffractogramme des nanocristaux de ZSM-5. 400 µl de cette solution sont alors ajoutés à une solution contenant 30 g d'éthanol, 15 ml d'eau, 4,5 g de TEOS, 0,036 ml d'HCl et 1,4 g de tensioactif F127. Le pH de la solution est ajusté à 2 avec HCl. L'ensemble est envoyé dans la chambre d'atomisation du générateur d'aérosol et la solution est pulvérisée sous la forme de fines gouttelettes sous l'action du gaz vecteur (air sec) introduit sous pression (P = 1,5 bars) comme il est décrit ci-dessus dans l'exposé de l'invention. Les gouttelettes sont séchées selon le protocole décrit dans l'exposé de l'invention ci-dessus. La température du four de séchage est fixée à 350°C. La poudre récoltée est alors calcinée sous air pendant 5 h à T = 550°C. Le solide est caractérisé par DRX aux bas angles (figure 2) et aux grands angles (figure 3), par isotherme d'adsorption d'azote, par MET et par fluorescence X. L'analyse MET (figure 4) montre que le matériau final est constitué de nanocristaux de zéolithe ZSM-5 piégés dans une matrice purement silicique à mésoporosité organisée caractérisée par une structure vermiculaire. L'analyse Isotherme d'adsorption d'azote conduit à une surface spécifique du matériau final de S_{BET} = 480 m²/g et à un diamètre mésoporeux caractéristique de la matrice mésostructurée purement silicique de φ = 6,2 nm. L'analyse DRX aux grands angles conduit à l'obtention du diffractogramme caractéristique de la zéolithe ZSM-5 (taille des micropores, mesurée par DRX, de l'ordre de 0,55 nm). L'analyse DRX aux petits angles conduit à la visualisation d'un pic de corrélation associé à l'organisation vermiculaire de la matrice mésostructurée. La relation de Bragg donne 2 d * sin (0,3) = 1,5406, soit d = 15 nm. L'épaisseur des parois amorphes de la matrice mésostructurée purement silicique définie par e = d - φ est donc de e = 9 nm. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

### Exemple 3 (invention) : Préparation d'un matériau aluminosilicate à porosité hiérarchisée constitué de nanocristaux de zéolithes de type ZSM-5 (MFI) (Si/Al = 50) à 10% poids du matériau final et d'une matrice aluminosilicate mésostructurée (Si/Al = 4).

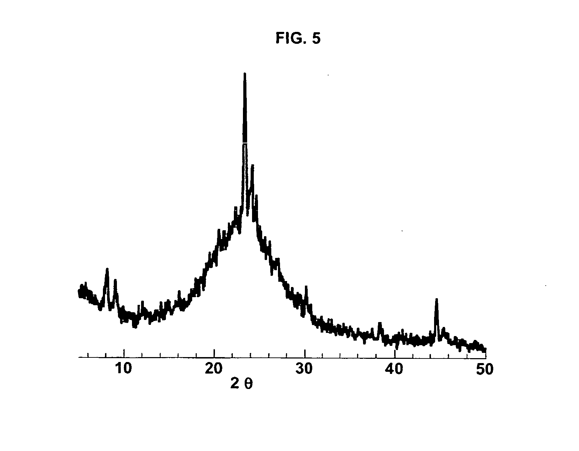

0,14 g de tri-sec-butoxyde d'aluminium sont ajoutés à une solution contenant 3,5 ml d'hydroxyde de TPAOH, 0,01 g de soude NaOH et 4,3 ml d'eau. Après dissolution de l'alcoxyde d'aluminium, 6 g de tetraéthylorthosilicate (TEOS) sont ajoutés. La solution est agitée à température ambiante pendant 5 h puis est autoclavée à T = 95°C pendant 12 h. La solution blanche obtenue contient des nanocristaux de ZSM-5 de 135 nm. Cette solution est centrifugée à 20000 rpm pendant 30 minutes. Le solide est redispersé dans de l'eau puis centrifugé de nouveau à 20000 rpm pendant 30 minutes. Ce lavage est effectué deux fois. Les nanocristaux forment un gel séché à l'étuve une nuit à 60°C. 0,461 mg de ces cristaux sont redispersés dans une solution contenant 30 g d'éthanol, 15 ml d'eau, 3,59 g de TEOS, 1,03g de AlCl₃. 6H₂0, 0,036 ml d'HCl et 1,4 g de tensioactif P123 par agitation aux ultra-sons pendant 24 heures. L'ensemble est envoyé dans la chambre d'atomisation du générateur d'aérosol et la solution est pulvérisée sous la forme de fines gouttelettes sous l'action du gaz vecteur (air sec) introduit sous pression (P = 1,5 bars) selon la méthode décrite dans l'exposé de l'invention ci-dessus. Les gouttelettes sont séchées selon le protocole décrit dans l'exposé de l'invention ci-dessus. La température du four de séchage est fixée à 350°C. La poudre récoltée est alors calcinée sous air pendant 5 h à T = 550°C. Le solide est caractérisé par DRX aux bas angles et aux grands angles (figure 5), par isotherme d'adsorption d'azote, par MET et par fluorescence X. L'analyse MET montre que le matériau final est constitué de nanocristaux de zéolithe ZSM-5 piégés dans une matrice aluminosilcate à mésoporosité organisée caractérisée par une structure vermiculaire. L'analyse Isotherme d'adsorption d'azote conduit à une surface spécifique du matériau final de S_{BET} = 478 m²/g et à un diamètre mésoporeux caractéristique de la matrice mésostructurée aluminoisilcate de φ = 4 nm. L'analyse DRX aux grands angles conduit à l'obtention du diffractogramme caractéristique de la zéolithe ZSM-5 (taille des micropores de l'ordre de 0,55 nm). L'analyse DRX aux petits angles conduit à la visualisation d'un pic de corrélation associé à la symétrie vermiculaire de la matrice mésostructurée. La relation de Bragg donne 2 d * sin (0,4) = 1,5406, soit d = 11 nm. L'épaisseur des parois amorphes de la matrice mésostructurée aluminosilicate définie par e = d - φ est donc de e = 7 nm. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

### Exemple 4 (invention) : Préparation d'un matériau aluminosilicate à porosité hiérarchisée constitué de nanocristaux de zéolithes de type A (LTA) (Si/Al = 6) à 3,7% poids du matériau final et d'une matrice mésostructurée purement silicique.

2,19 g d'isopropoxyde d'aluminium sont ajoutés à une solution contenant 3,5 ml d'hydroxyde de tétramethylammonium (TMAOH), 0,01 g de soude NaOH et 28 ml d'eau. Après dissolution de l'alcoxyde d'aluminium, 6 g de tetraéthylorthosilicate (TEOS) sont ajoutés. La solution est agitée à température ambiante pendant 5 h puis est autoclavée à T = 95°C pendant 12 h. La solution blanche obtenue contient des nanocristaux de LTA de 140 nm. 400 µl de cette solution sont alors ajoutés à une solution contenant 30 g d'éthanol, 15 ml d'eau, 4,5 g de TEOS, 0,036 ml d'HCl et 1,4 g de tensioactif F127. Le pH de la solution est ajusté à 2. L'ensemble est envoyé dans la chambre d'atomisation du générateur d'aérosol et la solution est pulvérisée sous la forme de fines gouttelettes sous l'action du gaz vecteur (air sec) introduit sous pression (P = 1,5 bars) selon la méthode décrite dans l'exposé de l'invention ci-dessus. Les gouttelettes sont séchées selon le protocole décrit dans l'exposé de l'invention ci-dessus. La température du four de séchage est fixée à 350°C. La poudre récoltée est alors calcinée sous air pendant 5 h à T = 550°C. Le solide est caractérisé par DRX aux bas angles et aux grands angles, par isotherme d'adsorption d'azote, par MET et par fluorescence X. L'analyse MET montre que le matériau final est constitué de nanocristaux de zéolithe A piégés dans une matrice purement silicique à mésoporosité organisée caractérisée par une structure vermiculaire. L'analyse Isotherme d'adsorption d'azote conduit à une surface spécifique du matériau final de S_{BET} = 478 m²/g et à un diamètre mésoporeux caractéristique de la matrice mésostructurée purement silicique de φ = 6 nm. L'analyse DRX aux grands angles conduit à l'obtention du diffractogramme caractéristique de la zéolithe LTA. L'analyse DRX aux petits angles conduit à la visualisation d'un pic de corrélation associées à une organisation vermiculaire de la porosité. La relation de Bragg donne 2 d * sin (0,3) = 1,5406, soit d = 15nm. L'épaisseur des parois amorphes de la matrice mésostructurée purement silicique définie par e = d - φ est donc de e = 9 nm. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

## Revendications

1. Matériau à porosité hiérarchisée constitué d'au moins deux particules sphériques élémentaires, chacune desdites particules sphériques comprenant des nanocristaux zéolithiques ayant une taille de pores comprise entre 0,2 et 2 nm et une matrice à base d'oxyde de silicium, mésostructurée, présentant des mésopores de diamètre φ compris entre 1,5 et 30 nm et présentant des parois amorphes d'épaisseur e comprise entre 1 et 20 nm, ladite épaisseur étant égale à la différence entre la valeur du diamètre des mésopores φ et la distance de corrélation d entre les mésopores définie par DRX aux bas angles, lesdites particules sphériques élémentaires ayant un diamètre maximal de 10 µm.

2. Matériau selon la revendication 1 tel que lesdits nanocristaux zéolithiques ont une taille de pores comprise entre 0,2 et 0,6 nm.

3. Matériau selon la revendication 1 ou la revendication 2 tel que le diamètre des mésopores de ladite matrice mésostructurée est comprise entre 1,5 et 10 nm.

4. Matériau selon l'une des revendications 1 à 3 tel que ladite matrice mésostructurée présente une structure hexagonale, cubique ou vermiculaire.

5. Matériau selon l'une des revendications 1 à 4 tel que ladite matrice à base d'oxyde de silicium est entièrement silicique.

6. Matériau selon l'une des revendications 1 à 4 tel que ladite matrice à base d'oxyde de silicium comprend au moins un élément X choisi dans le groupe constitué par l'aluminium, le titane, le zirconium, le gallium, le germanium et le niobium.

7. Matériau selon la revendication 6 tel que l'élément X est l'aluminium.

8. Matériau selon la revendication 7 tel que ladite matrice présente un rapport Si/AI au moins égal à 1.

9. Matériau selon l'une des revendications 1 à 8 tel que les nanocristaux zéolithiques comprennent au moins une zéolithe choisie parmi les zéolithes de type structural MFI, BEA, FAU et LTA.

10. Matériau selon l'une des revendications 1 à 9 tel que lesdits nanocristaux zéolithiques comprennent au moins une zéolithe entièrement silicique,

11. Matériau selon l'une des revendications 1 à 9 tel que lesdits nanocristaux zéolithiques comprennent au moins une zéolithe contenant du silicium et de l'aluminium.

12. Matériau selon l'une des revendications 1 à 11 tel qu'il présente une surface spécifique comprise entre 100 et 1100 m²/g.

13. Procédé de préparation d'un matériau selon l'une des revendications 1 à 12 comprenant a) la synthèse, en présence d'un agent structurant, de nanocristaux zéolithiques de taille nanométrique maximale égale à 300 nm afin d'obtenir une solution colloïdale dans laquelle sont dispersés lesdits nanocristaux ; b) le mélange en solution d'au moins un tensioactif, d'au moins un précurseur silicique, éventuellement d'au moins un précurseur d'au moins un élément X choisi dans le groupe constitué par l'aluminium, le titane, le tungstène, le zirconium, le gallium, le germanium, le phosphore, l'étain, l'antimoine, le plomb, le vanadium, le fer, le manganèse, l'hafnium, le niobium, le tantale et l'yttrium, et d'au moins une solution colloïdal obtenue selon a) ; c) l'atomisation par aérosol de ladite solution obtenue à l'étape b) pour conduire à la formation de gouttelettes sphériques de diamètre inférieur à 200 µm; d) le séchage desdites gouttelettes et e) l'élimination dudit agent structurant et dudit tensioactif pour l'obtention d'un matériau à porosité hiérarchisée.

14. Procédé de préparation d'un matériau selon l'une des revendications 1 à 12 comprenant a') le mélange en solution d'au moins un tensioactif, d'au moins un précurseur silicique, éventuellement d'au moins un précurseur d'au moins un élément X choisi dans le groupe constitué par l'aluminium, le titane, le tungstène, le zirconium, le gallium, le germanium, le phosphore, l'étain, l'antimoine, le plomb, le vanadium, le fer, le manganèse, l'hafnium, le niobium, le tantale et l'yttrium, et de cristaux zéolithiques se dispersant sous la forme de nanocristaux de taille manométrique maximale égale à 300 nm dans ladite solution ; b') l'atomisation par aérosol de ladite solution obtenue à l'étape a') pour conduire à la formation de gouttelettes sphériques de diamètre inférieur à 200 µm; c') le séchage desdites gouttelettes et d') l'élimination d'au moins dudit tensioactif.

15. Procédé selon la revendication 13 ou la revendication 14 tel que l'élément X est l'aluminium.

16. Procédé selon l'une des revendications 13 à 15 tel que ledit tensioactif est un copolymère à trois blocs, chaque bloc étant constitué d'une chaîne de poly(oxyde d'alkylène).

17. Procédé selon la revendication 16 tel que ledit copolymère à trois blocs est constitué de deux chaînes de poly(oxyde d'éthylène) et d'une chaîne de poly(oxyde de propylène).

## Claims

1. A material with a hierarchical porosity, constituted by at least two spherical elementary particles, each of said spherical particles comprising zeolitic nanocrystals having a pore size in the range 0.2 to 2 nm and a matrix based on silicon oxide, which is mesostructured, having mesopores with a diameter φ in the range 1.5 to 30 nm and having amorphous walls with a thickness in the range 1 to 20 nm, said thickness being equal to the difference between the value for the mesopores diameter φ and the correlation distance between mesopores d defined by small angle XRD. said spherical elementary particles having a maximum diameter of 10 µm.

2. A material according to claim 1, in which said zeolitic nanocrystals have a pore dimension in the range 0.2 to 0.6 nm.

3. A material according to claim 1 or claim 2, in which the diameter of mesopores of said mesostructured matrix is in the range 1.5 to 10 nm.

4. A material according to one of claims 1 to 3, in which said mesostructured matrix has a hexagonal, cubic or vermicular structure.

5. A material according to one of claims 1 to 4, in which said matrix based on silicon oxide is entirely silicic.

6. A material according to one of claims 1 to 4, in which said matrix based on silicon oxide comprises at least one element X selected from the group constituted by aluminium, titanium, zirconium, gallium, germanium and niobium.

7. A material according to claim 6, in which the element X is aluminium.

8. A material according to claim 7, in which said matrix has a Si/Al ratio of at least 1.

9. A material according to one of claims 1 to 8, in which the zeolitic nanocrystals comprise at least one zeolite selected from zeolites with structure type MFI, BEA, FAU and L.TA,

10. A material according to one of claims 1 to 9, in which said zeolitic nanocrystals comprise at least one entirely silicic zeolite.

11. A material according to one of claims 1 to 9, in which said zeolitic nanocrystals comprise at least one zeolite containing silicon and aluminium.

12. A material according to one of claims 1 to 11, with a specific surface area in the range 100 to 1100 m²/g.

13. A process for preparing a material according to one of claims 1 to 12, comprising a) synthesis, in the presence of a template, of zeolitic nanocrystals with a maximum nanometric dimension of 300 nm to obtain a colloidal solution in which said nanocrystals are dispersed; b) mixing, in solution, at least one surfactant, at least one silicic precursor, optionally at least one precursor of at least one element X selected from the group constituted by aluminium, titanium, tungsten, zirconium, gallium, germanium, phosphorus, tin, antimony, lead, vanadium, iron, manganese, hafnium, niobium, tantalum and yttrium, and at least one colloidal solution obtained in accordance with a); c) aerosol atomization of said solution obtained in step b) to result in the formation of spherical droplets with a diameter of less than 200 µm; d) drying said droplets; and e) eliminating said template and said surfactant to obtain a material with a hierarchical porosity.

14. A process for preparing a material according to one of claims 1 to 12, comprising a') mixing, in solution, at least one surfactant, at least one silicic precursor, optionally at least one precursor of at least one element X selected from the group constituted by aluminium, titanium, tungsten, zirconium, gallium, germanium, phosphorus, tin, antimony, lead, vanadium, iron, manganese, hafnium, niobium, tantalum and yttrium, and zeolitic crystals dispersing into the form of nanocrystals with a maximum nanometric dimension of 300 nm in said solution; b') aerosol atomization of said solution obtained in step a') to result in the formation of spherical droplets with a diameter of less than 200 µm; c') drying said droplets; and d') eliminating at least said surfactant.

15. A process according to claim 13 or claim 14, in which the element X is aluminium.

16. A process according to one of claims 13 to 15, in which said surfactant is a three block copolymer, each block being constituted by a poly(alkylene oxide) chain.

17. A process according to claim 16, in which said three-block copolymer is constituted by two chains of poly(ethylene oxide) and one chain of poly(propylene oxide).

## Patentansprüche

1. Material mit hierarchisierter Porosität, bestehend aus mindestens zwei kugelförmigen Elementarteilchen, wobei jedes der kugelförmigen Teilchen zeolithische Nanokristalle umfasst, die eine Porengröße im Bereich zwischen 0,2 und 2 nm haben, und einer Matrix auf der Basis von mesostrukturiertem Siliciumoxid, die Mesoporen mit einem Durchmesser Ø im Bereich zwischen 1,5 und 30 nm aufweist und amorphe Wände mit einer Dicke e im Bereich zwischen 1 und 20 nm aufweist, wobei die Dicke gleich der Differenz zwischen dem Wert des Durchmessers der Mesoporen Ø und dem Karrelationsabstand *d* zwischen den Mesoporen ist, definiert mit einem Kleinwinkel-DRX, wobei die kugelförmigen Elementarteilchen einen maximalen Durchmesser von 10 µm haben.

2. Material nach Anspruch 1, wobei die zeolithischen Nanokristalle eine Porengröße im Bereich zwischen 0,2 und 0,6 nm haben.

3. Material nach Anspruch 1 oder Anspruch 2, wobei der Durchmesser der Mesoporen der mesostrukturierten Matrix im Bereich zwischen 1,5 und 10 nm liegt.

4. Material nach einem der Ansprüche 1 bis 3, wobei die mesostrukturierte Matrix eine hexagonale, kubische der vermikulare Struktur aufweist.

5. Material nach einem der Ansprüche 1 bis 4, wobei die Matrix auf der Basis von Siliciumoxid vollständig silicisch ist.

6. Material nach einem der Ansprüche 1 bis 4, wobei die Matrix auf der Basis von Siliciumoxid mindestens ein Element X umfasst, ausgewählt aus der Gruppe bestehend aus Aluminium, Titan, Zirconium, Gallium, Germanium und Niob.

7. Material nach Anspruch 6, wobei das Element X Aluminium ist.

8. Material nach Anspruch 7, wobei die Matrix ein Si/AI-Verhältnis von mindestens gleich 1 aufweist.

9. Material nach einem der Ansprüche 1 bis 8, wobei die zeolithischen Nanokristalle mindestens einen Zeolithen, ausgewählt aus den Zeolithen vom Strukturtyp MFI, BEA, FAU und LTA, umfassen.

10. Material nach einem der Ansprüche 1 bis 9, wobei die zeolithischen Nanokristalle mindestens einen vollständig silicischen Zeolithen umfassen.

11. Material nach einem der Ansprüche 1 bis 9, wobei die zeolithischen Nanokristalle mindestens einen Zeolithen umfassen, der Silicium und Aluminium umfasst.

12. Material nach einem der Ansprüche 1 bis 11, wobei es eine spezifische Oberfläche im Bereich zwischen 100 und 1.100 m²/g aufweist.

13. Verfahren zur Herstellung eines Materials nach einem der Ansprüche 1 bis 12, umfassend a) die Synthese von zeolithischen Nanokristallen mit maximaler Nanometergröße gleich 300 nm in Gegenwart eines Strukturgebers, um eine Kolloidlösung zu erhalten, in der die Nanokristalle dispergiert sind; b) das Mischen in Lösung mindestens eines grenzflächenaktiven Stoffs, mindestens eines Siliciumvorläufers, gegebenenfalls mindestens eines Vorläufers mindestens eines Elements X, ausgewählt aus der Gruppe, bestehend aus Aluminium, Titan, Wolfram, Zirconium, Gallium, Germanium, Phosphor, Zinn, Antimon, Blei, Vanadium, Eisen, Mangan, Hafnium, Niob, Tantal und Yttrium, und mindestens einer gemäß a) erhaltenen Kolloidlösung; c) die Aerosolzerstäubung der in Schritt b) erhaltenen Lösung, um zur Bildung von kugelförmigen Tröpfchen mit einem Durchmesser von weniger als 200 µm zu führen; d) das Trocknen der Tröpfchen und e) das Entfernen des Strukturgebers und des grenzflächenaktiven Stoffs, um ein Material mit hierarchisierter Porosität zu erhalten.

14. Verfahren zur Herstellung eines Materials nach einem der Ansprüche 1 bis 12, umfassend a') das Mischen in Lösung mindestens eines grenzflächenaktiven Stoffs, mindestens eines Siliciumvorläufers, gegebenenfalls mindestens eines Vorläufers mindestens eines Elements X, ausgewählt aus der Gruppe, bestehend aus Aluminium, Titan, Wolfram, Zirconium, Gallium, Germanium, Phosphor, Zinn, Antimon, Blei, Vanadium, Eisen, Mangan, Hafnium, Niob, Tantal und Yttrium, und von zeolithischen Kristallen, die sich in Form von Nanokristallen mit maximaler Nanometergröße gleich 300 nm in der Lösung dispergieren; b') die Aerosolzerstäubung der in Schritt a') erhaltenen Lösung, um zur Bildung von kugelförmigen Tröpfchen mit einem Durchmesser von weniger als 200 µm zu führen; c') das Trocknen der Tröpfchen und d') das Entfernen mindestens des Strukturgebers.

15. Verfahren nach Anspruch 13 oder nach Anspruch 14, wobei das Element X Aluminium ist.

16. Verfahren nach einem der Ansprüche 13 bis 15, wobei der grenzflächenaktive Stoff ein Dreiblock-Copolymer ist, wobei jeder Block aus einer Polyalkylen(oxid)kette ist.

17. Verfahren nach Anspruch 16, wobei das Dreiblock-Copolymer aus zwei Polyethylen(oxid)ketten und aus einer Polypropylen(oxid)kette besteht.
